# FASCICULE DE BREVET EUROPEEN

(11) **EP 1 888 894 B1**
(45) Date de publication et mention de la délivrance du brevet: **08.08.2018**
(21) Numéro de dépôt: 06764712.3
(22) Date de dépôt: 01.06.2006
(51) Int. Cl.: F02C 7/047

(54) **CAPOT D'ENTRÉE D'AIR POUR TURBOMOTEUR AVEC SYSTÈME POUR LE DÉGIVRAGE DE SON BORD D'ATTAQUE**
EINLASSVERKLEIDUNG FÜR EIN TURBINENTRIEBWERK MIT SYSTEM ZUM ENTEISEN DER VORDERKANTE
INLET COWL FOR A TURBINE ENGINE WITH SYSTEM FOR DEICING ITS LEADING EDGE

(30) Priorité: 07.06.2005 FR 0505757
(43) Date de publication de la demande: 20.02.2008
(73) Titulaire: AIRBUS OPERATIONS (SAS), 31060 Toulouse (FR)
(72) Inventeur: ZANARELLI, Marie-Luce, F-31170 Tournefeuille (FR); PORTE, Alain, F-31770 Colomiers (FR)
(74) Mandataire: Gevers & Orès
(86) Numéro de dépôt international: PCT/FR2006/001241
(87) Numéro de publication internationale: WO 2006/131623

(56) Documents cités:
- EP-A- 0 178 144
- EP-A- 0 205 283
- EP-A- 0 870 965
- EP-A- 0 918 150
- GB-A- 908 926
- GB-A- 2 259 679
- US-A1- 2003 217 778

## Description

La présente invention concerne le dégivrage des capots d'entrée d'air de turbomoteurs, notamment pour aéronefs.

On sait que, en cas de besoin (prévention contre la formation de givre ou élimination de givre déjà formé), le bord d'attaque du capot d'entrée d'air de tels turbomoteurs est dégivré par réchauffement par de l'air chaud sous pression, prélevé sur ledit turbomoteur et amené audit bord d'attaque par un circuit de circulation d'air chaud. Cet air chaud sous pression, prélevé sur le moteur, est à une température élevée, par exemple de l'ordre de 500°C, de sorte que ladite conduite rayonne de la chaleur et que les structures environnantes dudit capot d'entrée d'air, sensibles à la chaleur (par exemple les panneaux acoustiques en matériau composite), doivent être protégées contre la chaleur. De plus, pour des raisons de sécurité évidentes, il est également nécessaire de prévoir une protection desdites structures environnantes, dans le cas de fuites d'air chaud sous pression ou de rupture de ladite conduite.

A cet effet, par le document EP-1 251 257, on connaît un capot d'entrée d'air pour turbomoteur, notamment pour aéronef, ledit capot d'entrée d'air étant pourvu de moyens de dégivrage de son bord d'attaque et comportant à cet effet :
- un bord d'attaque creux délimitant une chambre annulaire, fermée par une première cloison interne ;
- une conduite d'alimentation en air chaud sous pression, apte à être raccordée, à son extrémité arrière opposée audit bord d'attaque, à un circuit d'air chaud sous pression et, à son extrémité avant vers ledit bord d'attaque, à un injecteur injectant ledit air chaud sous pression dans ladite chambre annulaire, ladite conduite d'alimentation étant au moins en partie disposée dans un caisson délimité, à l'avant, par ladite première cloison interne et, à l'arrière, par une seconde cloison interne ; et
- une enveloppe de protection interne disposée dans ledit caisson et délimitant un volume d'isolation enfermant ladite conduite d'alimentation.

Ainsi, dans ce capot d'entrée d'air connu, ladite conduite est isolée du reste de l'intérieur du capot d'entrée d'air et ladite enveloppe interne de protection, continue et intégrale, permet de protéger les structures environnantes contre les radiations thermiques et les fuites d'air chaud sous pression, ainsi que contre les effets d'une rupture de ladite conduite. Grâce à des ouvertures d'introduction et d'extraction d'air, on obtient, en fonctionnement normal, une ventilation permanente interne du volume d'isolation, ce qui limite la radiation thermique de la conduite d'alimentation, les structures environnantes sensibles à la chaleur se trouvant ainsi protégées de toute détérioration ou vieillissement, liés à l'exposition à des températures élevées. En cas de fuites, de rupture ou d'explosion de la conduite, l'air chaud est évacué à l'extérieur à travers l'ouverture d'extraction, de sorte que, là encore, lesdites structures environnantes sont protégées contre l'air chaud sous pression.

Ce capot d'entrée d'air connu remplit donc parfaitement ses fonctions de protection thermique desdites structures environnantes. Cependant, dans la pratique, afin d'éviter que la dilatation longitudinale de ladite conduite d'alimentation et de ladite enveloppe de protection (généralement réalisées en acier) sous l'effet de la température imposent des contraintes auxdites première et seconde cloisons, on est amené à réaliser chacun des deux éléments que sont ladite conduite d'alimentation et ladite enveloppe de protection en deux parties emboîtées l'une dans l'autre et aptes à coulisser l'une par rapport à l'autre, de façon étanche.

Ainsi, l'augmentation thermique de longueur de ladite conduite et de ladite enveloppe est absorbée par le coulissement rentrant desdites deux parties constituant ces éléments.

On doit cependant remarquer que l'air chaud circulant dans ladite conduite d'alimentation est sous une pression élevée, par exemple de l'ordre de 10 à 20 bars, de sorte que cette pression interne a pour effet d'écarter l'une de l'autre, en fonctionnement normal, les deux parties de ladite conduite d'alimentation et, en cas de rupture de cette dernière, les deux parties de ladite conduite d'alimentation et les deux parties de l'enveloppe de protection. Il en résulte donc des contraintes appliquées auxdites cloisons par les deux parties de ladite conduite d'alimentation et/ou de ladite enveloppe de protection, lesdites contraintes tendant à déformer lesdites cloisons en les bombant vers l'extérieur du caisson. Il devient alors nécessaire de prévoir des renforts, lourds et onéreux, aptes à contrer de tels bombements.

Le document EP 0 178 144 décrit également une conduite d'air chaud qui délivre de l'air chaud à la surface interne du bord d'attaque d'un capot d'entrée de turbo-ventilateur pour le dégivrage du bord d'attaque.

La présente invention a pour objet un système de dégivrage permettant d'éviter les déformations des cloisons, sans pour autant utiliser des renforts desdites cloisons.

A cette fin, selon l'invention telle que définie par la revendication 1, le système pour le dégivrage du bord d'attaque d'un capot d'entrée d'air pour turbomoteur, notamment pour aéronef, ledit bord d'attaque étant creux et délimitant une chambre annulaire fermée par une première cloison interne et ledit système de dégivrage comportant :
- une conduite d'alimentation en air chaud sous pression, apte à être raccordée, à son extrémité arrière opposée audit bord d'attaque, à un circuit d'air chaud sous pression et, à son extrémité avant vers le bord d'attaque, à un injecteur injectant ledit air chaud sous pression dans ladite chambre annulaire du bord d'attaque, ladite conduite d'alimentation traversant un caisson dudit capot d'entrée d'air délimité, à l'avant, par ladite première cloison interne et, à l'arrière, par une seconde cloison interne ; et
- une enveloppe de protection interne disposée dans ledit caisson et délimitant un volume d'isolation enfermant ladite conduite d'alimentation,
est remarquable en ce que :
- l'un des deux éléments constitués par ladite conduite d'alimentation et par ladite enveloppe de protection est longitudinalement rigide, tandis que l'autre desdits éléments comporte au moins deux parties emboîtées l'une dans l'autre et aptes à coulisser l'une par rapport à l'autre, de façon étanche ; et
- lesdits deux éléments sont, d'un côté, rigidement fixés à l'une desdites cloisons, tandis que, de l'autre côté, lesdits deux éléments sont rigidement reliés l'un à l'autre et sont aptes à coulisser en commun par rapport à un palier de coulissement prévu dans l'autre cloison.

Ainsi, comme on le verra plus en détail par la suite, celui desdits deux éléments qui est longitudinalement rigide agit comme un tirant pour l'autre desdits éléments en en limitant l'allongement et l'allongement propre dudit tirant est sans effet sur lesdites cloisons du fait de la présence dudit palier de coulissement.

Ladite conduite d'alimentation peut être longitudinalement rigide, alors que ladite enveloppe de protection comporte au moins deux parties emboîtées l'une dans l'autre et aptes à coulisser l'une par rapport à l'autre, de façon étanche. Cependant, dans un mode de réalisation préféré, ladite enveloppe de protection est longitudinalement rigide, alors que ladite conduite d'alimentation comporte au moins deux parties emboîtées l'une dans l'autre et aptes à coulisser l'une par rapport à l'autre, de façon étanche.

Ledit palier de coulissement peut être agencé soit dans ladite première cloison interne, soit dans ladite seconde cloison interne.

Avantageusement, ledit palier de coulissement comporte une butée apte à limiter le coulissement de ladite conduite d'alimentation et de ladite enveloppe de protection par rapport à la cloison correspondante.

La liaison rigide entre ladite conduite d'alimentation et ladite enveloppe de protection peut être réalisée au moyen de brides.

Les figures du dessin annexé feront bien comprendre comment l'invention peut être réalisée. Sur ces figures, des références identiques désignent des éléments semblables.
La figure 1 montre, en coupe axiale, le bord d'attaque d'un capot d'entrée d'air connu.
La figure 2 illustre schématiquement le bord d'attaque connu de la figure 1 et en présente l'inconvénient auquel la présente invention remédie.
Les figures 3A, 3B et 3C illustrent schématiquement, à la manière de la figure 2, trois positions différentes du système de dégivrage du bord d'attaque conforme à la présente invention, selon un premier mode de réalisation préféré.
La figure 4 montre, en vue schématique partielle, un exemple de réalisation pratique du premier mode de réalisation des figures 3A, 3B et 3C.
La figure 5 illustre une variante dudit premier mode de réalisation.
Les figures 6A, 6B et 6C illustrent schématiquement, de façon comparable aux figures 3A, 3B et 3C, les mêmes trois positions différentes pour un second mode de réalisation de la présente invention.
La figure 7 illustre une variante du second mode de réalisation des figures 6A, 6B, 6C.

Le bord d'attaque 1 du capot 2 entourant l'entrée d'air 3 d'un turbomoteur d'aéronef (non autrement représenté) est pourvu de moyens de dégivrage connus qui comportent :
- une chambre périphérique interne 4, ménagée dans le bord d'attaque creux 1 et fermée par une cloison avant interne 5, de forme annulaire, ancrée du côté de l'extrados 2E et du côté de l'intrados 21 du capot 2 ;
- une conduite 6 d'alimentation en air chaud sous pression, apte à être raccordée, à son extrémité arrière 6R opposée audit bord d'attaque 1, à un circuit d'air chaud sous pression 7 provenant du générateur de flux chaud du turbomoteur (non représenté) et, à son extrémité avant 6A, à un injecteur 8 injectant ledit air chaud sous pression dans ladite chambre interne 4 du bord d'attaque 1 ; et
- une enveloppe tubulaire de protection 9 entourant ladite conduite d'alimentation 6.

La conduite d'alimentation 6 et l'enveloppe de protection 9 traversent un caisson 10 délimité, à l'avant, par ladite cloison avant interne 5 et, à l'arrière, par une cloison- arrière interne 11, de forme annulaire, ancrée du côté de l'extrados 2E et du côté de l'intrados 2I et traversée par ladite extrémité arrière 6R de la conduite 6. Ainsi, ladite enveloppe de protection 9 délimite, en coopération avec les cloisons avant 5 et arrière 11, un volume d'isolation 12.

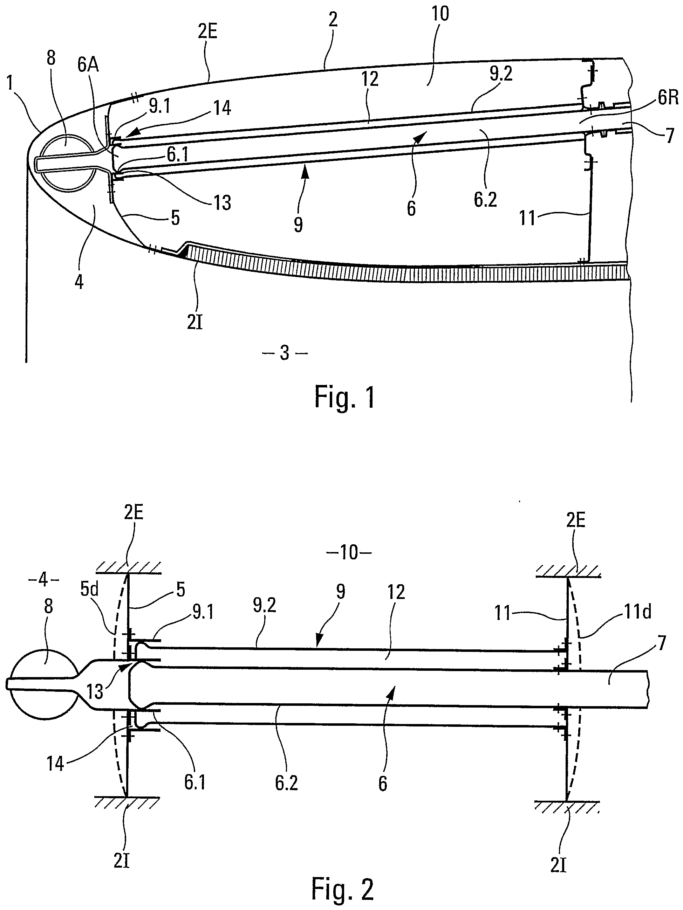

Dans ce mode de réalisation connu des figures 1 et 2, aussi bien la conduite d'alimentation 6 que l'enveloppe de protection 9 sont constituées en réalité de deux parties, respectivement 6.1, 6.2 et 9.1, 9.2. Les deux parties 6.1, 6.2 de ladite conduite d'alimentation 6 sont montées de façon télescopique l'une par rapport à l'autre et sont reliées de façon étanche par un joint glissant ou un soufflet 13. De même, les deux parties 9.1 et 9.2 de l'enveloppe de protection 9 sont montées de façon télescopique et sont reliées de façon étanche par un joint glissant ou un soufflet 14.

Par ailleurs, les parties 6.1 et 9.1 sont rigidement fixées à la cloison avant 5, alors que les parties 6.2 et 9.2 sont rigidement fixées à la cloison arrière 11.

On comprendra aisément que, du fait de la réalisation de la conduite d'alimentation 6 et de l'enveloppe de protection 9 en deux parties télescopiques 6.1, 6.2 et 9.1, 9.2, on élimine la pression exercée, sur lesdites cloisons 5 et 11, par la dilatation thermique de la conduite d'alimentation 6 et de l'enveloppe de protection 9 sous l'effet de l'air chaud traversant la conduite d'alimentation 6.

Toutefois, l'air chaud traversant ladite conduite d'alimentation 6 étant sous pression élevée, cette pression exerce une action d'écartement des deux parties 6.1 et 6.2 de la conduite d'alimentation 6 et, par conséquence, des deux parties 9.1 et 9.2 de l'enveloppe de protection 9.

Il en résulte que la conduite d'alimentation 6 agit à la manière d'un vérin sur les cloisons 5 et 11, qui se bombent vers l'extérieur du caisson 10, comme cela est représenté schématiquement par les lignes pointillées 5d et 11d sur la figure 2. Bien entendu, en cas de rupture accidentelle de la conduite d'alimentation 6, l'air chaud se répand dans le volume d'isolation 12, de sorte que l'action d'écartement exercée par ledit air chaud sur les cloisons 5 et 11 est encore augmentée par le vérin de plus grand diamètre que constitue alors l'enveloppe de protection 9. Il est donc nécessaire de prévoir des renforts (par exemple des bielles non représentées) appliqués auxdites cloisons 5 et 11 pour en éviter le bombement non seulement en fonctionnement, mais encore en cas de rupture de la conduite d'alimentation 6, ce qui augmente le coût et la masse de l'aéronef.

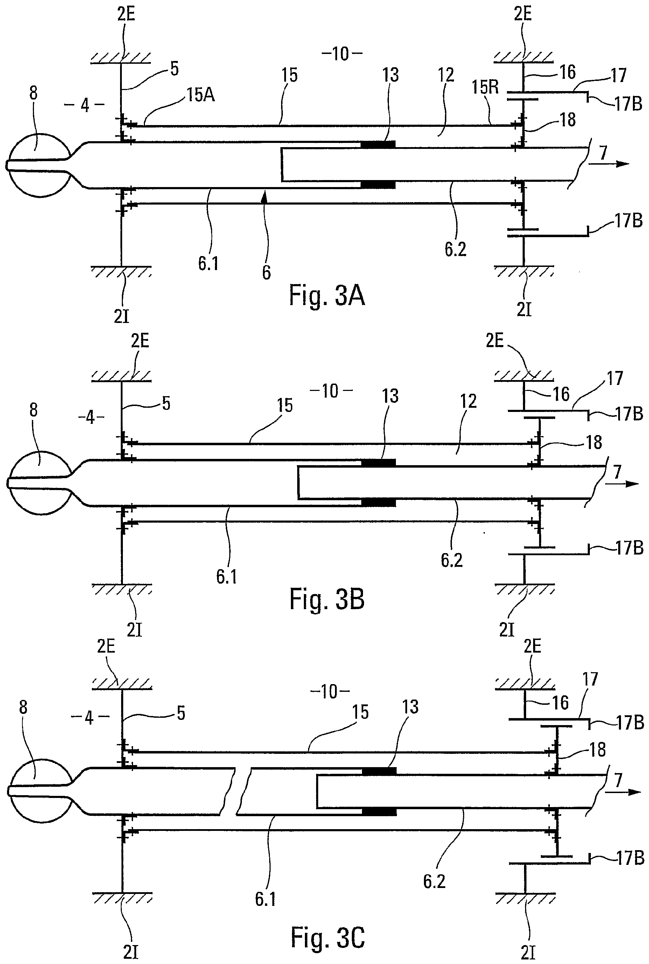

Sur les figures 3A, 3B et 3C, on a représenté schématiquement un système de dégivrage selon l'invention permettant de remédier à ces inconvénients. Par rapport au mode de réalisation connu des figures 1 et 2, dans le système de dégivrage des figures 3A, 3B et 3C :
- la cloison avant 5 et la conduite d'alimentation 6 (en deux parties télescopiques 6.1 et 6.2 reliées de façon étanche) restent inchangées ;
- l'enveloppe de protection 9 (en deux parties 9.1 et 9.2) est remplacée par une enveloppe de protection 15 d'une seule pièce ; et
- la cloison arrière 11 est remplacée par une cloison 16 pourvue d'un palier de coulissement 17.

De plus, dans ce mode de réalisation des figures 3A, 3B et 3C :
- la partie 6.1 de la conduite d'alimentation 6 et la partie avant 15A de l'enveloppe de protection 15 sont rigidement fixées à la cloison avant 5 ; et
- la partie 6.2 de la conduite d'alimentation 6 et la partie arrière 15R de l'enveloppe de protection 15 sont solidarisées l'une de l'autre grâce à des moyens de solidarisation 18 et sont aptes à coulisser en commun dans le palier de coulissement 17.

La figure 3A représente par exemple l'état du système de dégivrage selon l'invention au repos, sans circulation d'air chaud sous pression dans la conduite d'alimentation 6 en direction de l'injecteur 8. Si, à partir de l'état de la figure 3A, on admet de l'air chaud sous pression dans ladite conduite d'alimentation 6, ladite conduite 6 a tendance à s'allonger sous l'action combinée de la température (dilatation longitudinale) et de la pression interne (écartement des parties 6.1 et 6.2 l'une de l'autre). Cependant, du fait que, dans un premier temps, l'enveloppe de protection 15 reste froide, et donc de longueur fixe, l'allongement de la conduite d'alimentation 6 est empêché par ladite enveloppe de protection 15 qui agit comme un tirant. Le système de dégivrage reste donc dans l'état de la figure 3A.

Ensuite, la température de l'enveloppe de protection 15 augmentant sous l'effet de la radiation thermique de la conduite d'alimentation 6, cette enveloppe de protection 15 se dilate longitudinalement, de sorte que les moyens de solidarisation 18 se déplacent par rapport au palier de coulissement 17, comme cela est représenté sur la figure 3B. Toutefois, là encore, l'allongement de la conduite 6, sous l'effet combiné de la température et de la pression, est limité par le tirant (dont la longueur est alors supérieure à celle représentée sur la figure 3A) constitué par l'enveloppe de protection 15.

Si maintenant, comme cela est représenté sur la figure 3C, la conduite d'alimentation 6 se rompt, l'air chaud sous pression se répand dans l'enveloppe de protection 15, qui est alors soumise à la température et à la pression dudit air chaud. L'enveloppe de protection 15 s'allonge donc en conséquence sous l'action combinée de la température et de la pression et les moyens de solidarisation 18 se déplacent par rapport au palier 17, l'expansion longitudinale de la conduite d'alimentation 6 rompue (voir la figure 3C) étant toujours contenue par ladite enveloppe de protection 15.

De ce qui précède, on constate donc que, dans tous les cas, l'expansion longitudinale de la conduite 6 est contrôlée et contenue par l'enveloppe de protection 15, sans application d'efforts sur les cloisons 5 et 16 du fait du coulissement des moyens de solidarisation 18 dans le palier de coulissement 17.

Eventuellement, à titre de sécurité, le palier de coulissement 17 comporte une butée 17B limitant la course de coulissement vers l'extérieur du caisson 10.

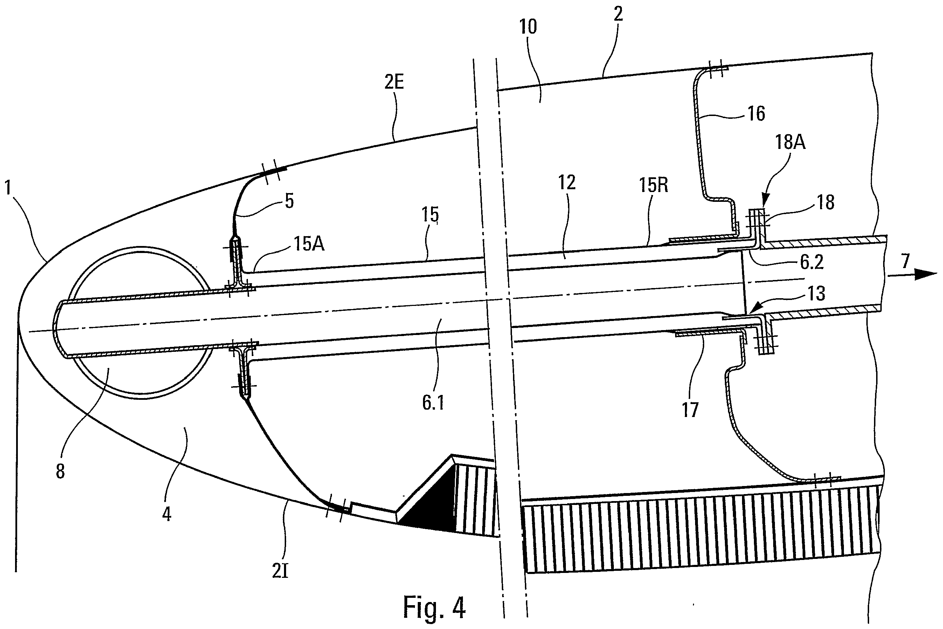

Sur la figure 4, on a représenté un exemple de réalisation pratique du système de dégivrage représenté schématiquement sur les figures 3A, 3B et 3C. On peut y voir que l'enveloppe de protection 15 est directement montée à coulissement dans le palier 17 et que les moyens de solidarisation 18 sont du type à brides 18A.

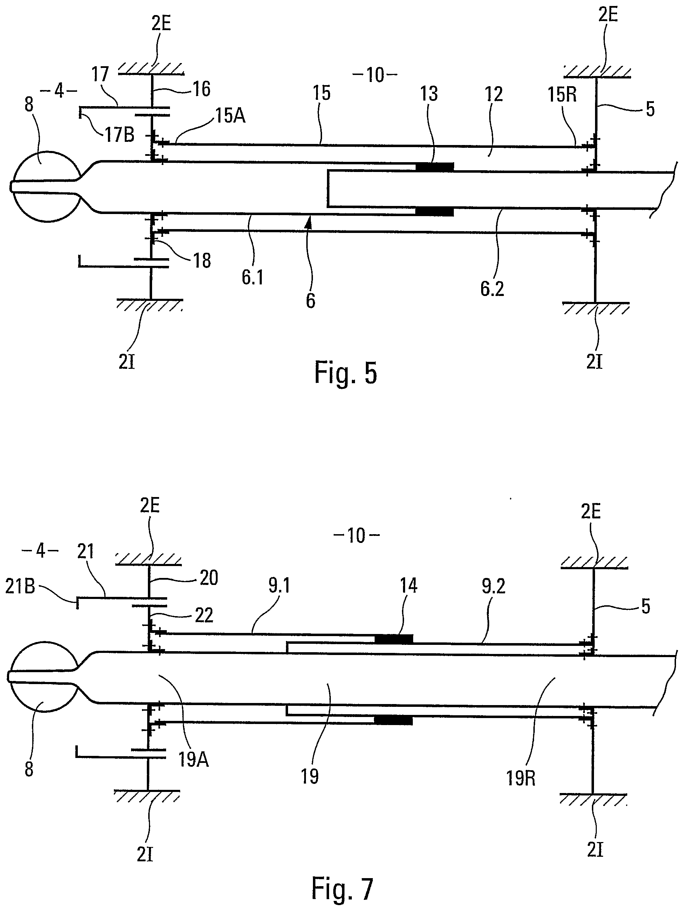

Bien que, sur les figures 3A, 3B, 3C et 4, on ait représenté la cloison avant comme fixe et la cloison arrière comme pourvue du palier 17 apte à permettre le déplacement longitudinal des moyens de solidarisation 18, on comprendra aisément, à l'aide de ce qui précède et de la figure 5, que les cloisons avant et arrière peuvent être interchangées. Dans ce cas, les moyens de solidarisation 18 solidarisent la partie 6.1 de la conduite d'alimentation 6 et la partie avant 15A de l'enveloppe de protection 15 et la butée 17B limite le coulissement vers l'extérieur du caisson 10, en direction de l'injecteur 8.

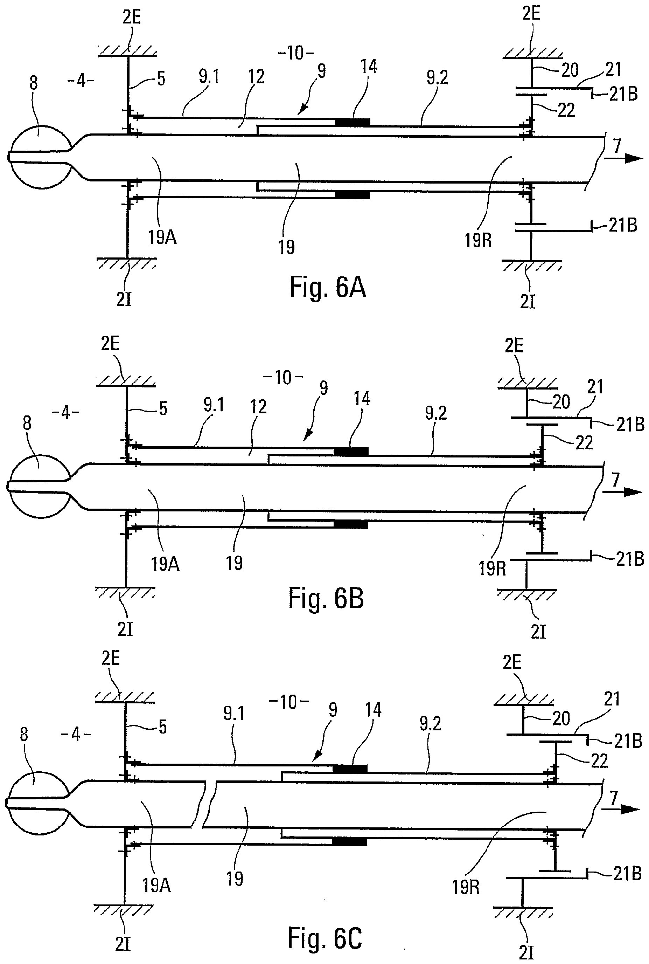

Un autre mode de réalisation du système de dégivrage selon l'invention est montré par les figures 6A, 6B, 6C. Par rapport au système de dégivrage connu des figures 1 et 2, dans cette variante de réalisation :
- la cloison avant 5 et l'enveloppe de protection 9 (en deux parties télescopiques 9.1 et 9.2 reliées de façon étanche) restent inchangées ;
- la conduite d'alimentation 6 (en deux parties 6.1 et 6.2) est remplacée par une conduite d'alimentation 19 d'une seule pièce ; et
- la cloison arrière 11 est remplacée par une cloison 20 pourvue d'un palier de coulissement 21 avec butée 21B vers l'extérieur (la cloison 20 et le palier 21 étant respectivement semblables à la cloison 16 et au palier 17 des figures 3A, 3B et 3C).

De plus, dans la variante de réalisation des figures 6A, 6B et 6C :
- la partie 9.1 de l'enveloppe de protection 9 et la partie avant 19A de la conduite d'alimentation 19 sont rigidement fixées à la cloison avant 5 ;
- la partie 9.2 de l'enveloppe de protection 9 et la partie arrière 19R de la conduite 19 sont solidarisées l'une de l'autre grâce à des moyens de solidarisation 22 et sont aptes à coulisser en commun dans le palier de coulissement 21.

Les figures 6A, 6B et 6C correspondent respectivement aux figures 3A, 3B et 3C.

La figure 6A représente le système de dégivrage au repos. Si on admet de l'air chaud sous pression dans la conduite d'alimentation 19, celle-ci se dilate longitudinalement, ce qui est autorisé par le palier 21, sans appliquer de contraintes aux cloisons 5 et 20 (voir la figure 6B). De plus, l'enveloppe de protection télescopique 9 suit cet allongement. En fonctionnement, l'allongement de l'enveloppe de protection 9 est contrôlé par la conduite d'alimentation 19 faisant fonction de tirant. Si cette dernière se rompt (figure 6C), l'enveloppe de protection 9 s'allonge, mais son allongement est limité vers l'extérieur du caisson 10 par la butée 21B du palier 21.

La figure 7 illustre une variante du mode de réalisation des figures 6A, 6B et 6D dans laquelle les cloisons avant et arrière ont été interchangées.

## Revendications

1. Capot d'entrée d'air (2) pour turbomoteur, notamment pour aéronef, le capot (2) comprenant un bord d'attaque (1) et un système de dégivrage, ledit bord d'attaque (1) étant creux et délimitant une chambre annulaire (4) fermée par une première cloison interne (5) et ledit système de dégivrage comportant :
- une conduite (6, 19) d'alimentation en air chaud sous pression, apte à être raccordée, à son extrémité arrière opposée audit bord d'attaque (1), à un circuit (7) d'air chaud sous pression et, à son extrémité avant vers le bord d'attaque (1), à un injecteur (8) injectant ledit air chaud sous pression dans ladite chambre annulaire (4) du bord d'attaque, ladite conduite d'alimentation traversant un caisson (10) dudit capot d'entrée d'air (2) délimité, à l'avant, par ladite première cloison interne (5, 16, 20) et, à l'arrière, par une seconde cloison interne (5, 16, 20) ; et
- une enveloppe de protection interne (9, 15) disposée dans ledit caisson (10) et délimitant un volume d'isolation (12) enfermant ladite conduite d'alimentation (6, 19),
- lesdits deux éléments constitués par ladite conduite d'alimentation (6,19) et par ladite enveloppe de protection (9,15) étant, d'un côté, rigidement fixés à l'une desdites cloisons, tandis que, de l'autre côté, lesdits deux éléments sont rigidement reliés l'un à l'autre et sont aptes à coulisser en commun par rapport à un palier de coulissement (17, 21) prévu dans l'autre cloison ;
**caractérisé en ce que** :
- l'un des deux éléments est longitudinalement rigide, tandis que l'autre desdits éléments comporte au moins deux parties emboîtées l'une dans l'autre et aptes à coulisser l'une par rapport à l'autre, de façon étanche.

2. Capot selon la revendication 1,
**caractérisé en ce que** ladite conduite d'alimentation (19) est longitudinalement rigide, alors que ladite enveloppe de protection (9) comporte au moins deux parties (9.1, 9.2) emboîtées l'une dans l'autre et aptes à coulisser l'une par rapport à l'autre, de façon étanche.

3. Capot selon la revendication 1,
**caractérisé en ce que** ladite enveloppe de protection (15) est longitudinalement rigide, alors que ladite conduite d'alimentation (6) comporte au moins deux parties (6.1, 6.2) emboîtées l'une dans l'autre et aptes à coulisser l'une par rapport à l'autre, de façon étanche.

4. Capot selon l'une des revendications 1 à 3,
**caractérisé en ce que** ledit palier de coulissement (17, 21) est agencé dans ladite première cloison interne (5).

5. Capot selon l'une des revendications 1 à 3,
**caractérisé en ce que** ledit palier de coulissement (17, 21) est agencé dans ladite seconde cloison interne (16, 20).

6. Capot selon l'une des revendications 1 à 5,
**caractérisé en ce que** ledit palier de coulissement (17, 21) comporte une butée (17B, 21B) apte à limiter le coulissement de ladite conduite d'alimentation et de ladite enveloppe de protection vers l'extérieur dudit caisson (10).

7. Capot selon l'une des revendications 1 à 6,
**caractérisé en ce que** ledit palier de coulissement coopère avec ladite enveloppe de protection.

8. Capot selon l'une des revendications 1 à 7,
**caractérisé en ce que** la liaison rigide (18) entre ladite conduite d'alimentation et ladite enveloppe de protection est réalisée au moyen de brides (18A).

## Patentansprüche

1. Lufteinlasshaube (2) für ein Turbinentriebwerk, insbesondere für ein Luftfahrzeug, wobei die Haube (2) eine Vorderkante (1) und ein Enteisungssystem umfasst, wobei die Vorderkante (1) hohl ist und eine ringförmige Kammer (4) abgrenzt, die durch eine erste innere Trennwand (5) geschlossen ist, und das Enteisungssystem Folgendes umfasst:
- eine Leitung (6, 19) zum Zuführen warmer Druckluft, die geeignet ist, um an ihrem hinteren Ende, das der Vorderkante (1) gegenüberliegt, an einen Kreislauf (7) für warme Druckluft und an ihrem vorderen Ende zur Vorderkante (1) hin an eine Einblasdüse (8), welche die warme Druckluft in die ringförmige Kammer (4) der Vorderkante einbläst, angeschlossen zu sein, wobei die Zufuhrleitung durch einen Caisson (10) der Lufteinlasshaube (2), der vorne durch die erste innere Trennwand (5, 16, 20) und hinten durch eine zweite innere Trennwand (5, 16, 20) abgegrenzt ist, hindurchgeht; und
- eine innere Schutzhülle (9, 15), die in dem Caisson (10) angeordnet ist und ein Isoliervolumen (12) abgrenzt, das die Zufuhrleitung (6, 19) umschließt,
- wobei die beiden Elemente, die aus der Zufuhrleitung (6, 19) und aus der Schutzhülle (9, 15) bestehen, einerseits an einer der Trennwände starr befestigt sind, während die beiden Elemente andererseits starr miteinander verbunden sind und geeignet sind, um im Verhältnis zu einem Gleitlager (17, 21), das der anderen Trennwand bereitgestellt wird, gemeinsam zu gleiten;
**dadurch gekennzeichnet, dass**:
- eines der beiden Elemente in Längsrichtung starr ist, während das andere der Elemente mindestens zwei Teile umfasst, die ineinandergesteckt sind und geeignet sind, um im Verhältnis zueinander abgedichtet zu gleiten.

2. Haube nach Anspruch 1,
**dadurch gekennzeichnet, dass** die Zufuhrleitung (19) in Längsrichtung starr ist, während die Schutzhülle (9) mindestens zwei Teile (9.1, 9.2) umfasst, die ineinandergesteckt sind und geeignet sind, im Verhältnis zueinander abgedichtet zu gleiten.

3. Haube nach Anspruch 1,
**dadurch gekennzeichnet, dass** die Schutzhülle (15) in Längsrichtung starr ist, während die Zufuhrleitung (6) mindestens zwei Teile (6.1, 6.2) umfasst, die ineinandergesteckt sind und geeignet sind, im Verhältnis zueinander abgedichtet zu gleiten.

4. Haube nach einem der Ansprüche 1 bis 3,
**dadurch gekennzeichnet, dass** das Gleitlager (17, 21) in der ersten inneren Trennwand (5) angeordnet ist.

5. Haube nach einem der Ansprüche 1 bis 3,
**dadurch gekennzeichnet, dass** das Gleitlager (17, 21) in der zweiten inneren Trennwand (16, 20) angeordnet ist.

6. Haube nach einem der Ansprüche 1 bis 5,
**dadurch gekennzeichnet, dass** das Gleitlager (17, 21) einen Anschlag (17B, 21B) umfasst, der geeignet ist, um das Gleiten der Zufuhrleitung und der Schutzhülle zur Außenseite des Caissons (10) einzuschränken.

7. Haube nach einem der Ansprüche 1 bis 6,
**dadurch gekennzeichnet, dass** das Gleitlager mit der Schutzhülle zusammenwirkt.

8. Haube nach einem der Ansprüche 1 bis 7,
**dadurch gekennzeichnet, dass** die starre Verbindung (18) zwischen der Zufuhrleitung und der Schutzhülle anhand von Flanschen (18A) ausgebildet ist.

## Claims

1. Nose inlet cowl (2) for a turbine engine, in particular for an aircraft, the cowl (2) comprising a leading edge (1) and a deicing system, said leading edge (1.) being hollow and defining an annular chamber (4) closed by a first internal bulkhead (5), and said deicing system comprising:
- a pressurized hot air supply duct (6, 19) designed to be connected, at its rear end opposed to said leading edge (1), to a pressurized hot air circuit (7) and, at its front end toward said leading edge (1), to an injector (8) injecting said pressurized hot air into said annular chamber (4) of the leading edge, said supply duct passing through a compartment (10) of said nose inlet cowl (2) that is defined, at the front, by said first internal bulkhead (5, 16, 20) and, at the rear, by a second internal bulkhead (5, 16, 20); and
- an internal protective envelope (9, 15) arranged in said compartment (10) and defining an isolation volume (12) enclosing said supply duct (6, 19),
- said two elements formed by said supply duct (6, 19) and by said protective envelope (9, 15), being, on one side, rigidly fastened to one of said bulkheads, while, on the other side, said two elements being rigidly connected to one another and are able to slide jointly relative to a sliding bearing (17, 21) provided in the other bulkhead;
**characterized in that**:
- one of the two elements is longitudinally rigid, while the other of said elements comprises at least two parts nested one inside the other and able to slide relative to one another in a sealed manner.

2. Cowl as claimed in claim 1, **characterized in that** said supply duct (19) is longitudinally rigid, whereas said protective envelope (9) comprises at least two parts (9.1, 9.2) nested one inside the other and able to slide relative to one another in a sealed manner.

3. Cowl as claimed in claim 1, **characterized in that** said protective envelope (15) is longitudinally rigid, whereas said supply duct (6) comprises at least two parts (6.1, 6.2) nested one inside the other and able to slide relative to one another in a sealed manner.

4. Cowl as claimed in one of claims 1 to 3, **characterized in that** said sliding bearing (17, 21) is arranged in said first internal bulkhead (5).

5. Cowl as claimed in one of claims 1 to 3, **characterized in that** said sliding bearing (17, 21) is arranged in said second internal bulkhead (16, 20).

6. Cowl as claimed in one of claims 1 to 5, **characterized in that** said sliding bearing (17, 21) comprises a stop (17B, 21B) designed to limit the sliding movement of said supply duct and of said protective envelope toward the outside of said compartment (10) .

7. Cowl as claimed in one of claims 1 to 6, **characterized in that** said sliding bearing cooperates with said protective envelope.

8. Cowl as claimed in one of claims 1 to 7, **characterized in that** the rigid connection (18) between said supply duct and said protective envelope is produced by means of flanges (18A).
